# EUROPÄISCHE PATENTSCHRIFT

(11) **EP 2 029 829 B1**
(45) Veröffentlichungstag und Bekanntmachung des Hinweises auf die Patenterteilung: **23.08.2017**
(21) Anmeldenummer: 07730162.0
(22) Anmeldetag: 14.06.2007
(51) Int. Cl.: B29L 31/10, B32B 21/04, B32B 27/04, B29C 45/00, E04F 13/08, E04F 13/18, E04F 15/02, E04F 15/10, B32B 9/02, E04F 13/10

(54) **BAUTEIL, VORZUGSWEISE FÜR DIE VERKLEIDUNG VON FUSSBÖDEN, WÄNDEN UND DECKEN, SOWIE VERFAHREN ZU DESSEN HERSTELLUNG**
COMPONENT, PREFERABLY FOR COVERING FLOORS, WALLS AND CEILINGS, AND METHOD OF PRODUCING IT
COMPOSANT, DE PRÉFÉRENCE POUR L'HABILLAGE DE SOLS, DE MURS ET DE PLAFONDS, ET PROCÉDÉ POUR SA FABRICATION

(30) Priorität: 14.06.2006 DE 102006027982
(43) Veröffentlichungstag der Anmeldung: 04.03.2009
(73) Patentinhaber: Fritz Egger GmbH & Co. OG, 6380 St. Johann in Tirol (AT)
(72) Erfinder: STEINWENDER, Martin, 2380 Perchtoldsdorf (AT); MAURER, Werner, 3133 Traismauer (AT)
(74) Vertreter: Cohausz & Florack
(86) Internationale Anmeldenummer: PCT/EP2007/055895
(87) Internationale Veröffentlichungsnummer: WO 2007/144403

(56) Entgegenhaltungen:
- EP-A- 1 207 246
- WO-A-01/48333
- WO-A-02/04207
- WO-A-03/087497
- WO-A-2004/015221
- WO-A-2004/048716
- WO-A-2005/003489
- WO-A-2005/003574
- WO-A1-2006/039726
- WO-A1-2007/015860
- WO-A2-2007/141605
- DE-A1-102004 003 457
- JP-A- 2006 123 280
- US-A- 5 618 602
- US-A1- 2002 122 919

## Beschreibung

Die Erfindung betrifft ein Bauteil, vorzugsweise für die Verkleidung von Fußböden, Wänden und Decken, mit einer Kernschicht, wobei wenigstens die Kernschicht aus einem einen Kunststoff und ein lignozellulosehaltiges Material umfassenden Gemisch gebildet ist, wobei die Kernschicht an wenigstens zwei der einander gegenüberliegenden Seitenkanten korrespondierende Verbindungselemente aufweist und wobei die Verbindungselemente einteilig mit der Kernschicht spritzgegossen sind und die Verbindungselemente als Verriegelungsmittel ausgebildet sind. Ferner betrifft die Erfindung ein Verfahren zur Herstellung derartiger Bauteile.

Die Bauteile der vorgenannten Art sind insbesondere Belagsmaterialien oder in der Möbelindustrie verwendete Bauteile von Möbeln.

Zahlreiche Arten von Belagsmaterialien sind aus dem Stand der Technik bekannt. Weit verbreitet für die Verkleidung von Wänden und Fußböden sind Beläge aus keramischen Materialien. Diese in Form von Fliesen oder geschnittenen Steinplatten erhältlichen Materialien werden in Trocken- und Nassbereichen gleichermaßen verwendet. Sie sind gegen Feuchtigkeit unempfindlich und können je nach Ausführung auch für Bereiche im Freien verwendet werden. Frost kann jedoch ein Problem darstellen.

Weit verbreitet sind auch Fußbodenbeläge aus Kunststoff. Diese zumeist aus PVC hergestellten Beläge zeichnen sich ebenfalls durch eine hohe Feuchteresistenz und zumeist geringe Herstellungskosten aus. Allerdings haben solche Belagsarten den Nachteil, dass diese nur sehr aufwändig, nämlich durch vollflächiges Verkleben unter Verwendung von anorganischen oder organischen Klebern, verlegt werden können. Neben den möglichen Emissionen, die durch die großflächige Anwendung von entsprechenden Klebern entstehen, ist bei solcherart verlegten Belägen auch von Nachteil, dass eine Demontage nur mit einem hohen Aufwand und nur eine einmalige Verlegung möglich ist. Zudem sind solche Beläge nur beschränkt dekorativ gestaltbar.

Sehr verbreitet sind auch die verschiedenen Arten von textilen Belägen sowie die verschiedenen Parkett- und Laminatfußbodenbeläge.

Parkett- und Laminatfußbodenbeläge haben vor allem in den letzten Jahren aufgrund der einfacher gewordenen Verlegeweise sowohl in gewerblich als auch in privat genutzten Bereichen verstärkt an Bedeutung gewonnen. Das Einsatzgebiet dieser Beläge ist allerdings auf Trockenbereiche begrenzt. Für Nassbereiche haben textile Beläge wie auch Beläge aus Holz oder auf Holzbasis keine ausreichende Feuchtebeständigkeit.

In jüngerer Zeit sind auch Beläge aus Holz/KunststoffMaterialien am Markt verfügbar. Diese weit verbreitet als WPC (wood plastic composits) bezeichneten Materialien wurden grundsätzlich für Beläge und Verkleidungen im Aussenbereich verwendet. Diese als "deckings" und "sidings" ursprünglich aus den USA stammenden Produkte dienen in großen Mengen als Ersatz für Profilholz. Sie zeichnen sich durch sehr gute Witterungsbeständigkeit und weitgehend natürliche Optik und Haptik aus. Flächig geschlossene Beläge können damit nicht realisiert werden, weitgehend natürliche Optik und Haptik aus. Flächig geschlossene Beläge können damit nicht realisiert werden, weswegen diese aus hygienischen Gründen üblicher Weise im Innenbereich nicht eingesetzt werden.

Aus der DE 10 2004 003 457 A1 ist eine Fliese aus einer Formmasse bestehend aus Fasermaterial, Farbpigmenten, einem duroplastischen Bindemittel und sonstigen Inhaltsstoffen bekannt. Diese Fliese wird in einer Formteilpresse hergestellt, wobei im Anschluss an das Verpressen durch Fräsen der Kanten Verriegelungselemente angebracht werden, mit denen die erhaltenen Elemente miteinander verbunden werden können.

Nachteilig an derartigen Fliesen ist deren aufwändige Herstellung.

Die US 2002/0122919 A1 betrifft ein Verfahren zur Herstellung eines Paneels über einen Spritzguss mit einer dekorativen Platte.

In der US 5,618,602 A werden Elemente eines Laminatfußbodens beschrieben, welche über eine Nut- und Federverbindung gekoppelt werden können.

Die WO 01/48333 A1 offenbart ein Verfahren zur Herstellung von Oberflächenelementen. Eine Kernschicht wird mit einer dekorativen Schicht verbunden und mit einer Schutzschicht überzogen.

Die JP 2006-123280 A betrifft ein Verfahren zur Herstellung von Platten als Baumaterial, wobei eine Mischung aus Holzstaub und recyceltem Kunststoff verwendet wird.

In der nachveröffentlichten WO 2007/015860 A1 wird ein System aus Fußbodenpaneelen mit Nut- und Federverbindungen beschrieben. Die Fußbodenpaneelen können in einem Spritzgussverfahren hergestellt werden.

Die nachveröffentlichte WO 2007/141605 A2 betrifft ein weiteres Fußbodenpaneel, welches insbesondere einen Verbund aus Holzmaterial und einem thermoplastischen Kunststoff umfasst.

Die WO 02/04207 A1 offenbart ein Verfahren zur Herstellung von Fußbodenelementen mit einer Kernschicht aus Polyurethan.

Der vorliegenden Erfindung liegt daher das technische Problem zugrunde, ein Bauteil, das einfacher hergestellt werden kann, sowie ein Verfahren für eine einfachere Herstellung des Bauteils anzugeben.

Zur Lösung dieses technischen Problems ist bei dem Bauteil gemäß Oberbegriff des Anspruchs 1 vorgesehen, dass ein Gemisch mit einem Massenmischungsverhältnis der Anteile von Kunststoff zu lignozellulosehaltigen Material im Bereich zwischen 60:40 und 40:60 verwendet wird, dass das Gemisch Netzmittel aufweist und dass wenigstens an einer Seitenkante ein Verbindungselement mit einer Hinterschneidung zum Verbinden zweier Bauteile einteilig mit der Kernschicht spritzgegossen ist, wobei die Verbindungselemente dafür eingerichtet sind, aufgrund einer Deformation eines

Verbindungselements eine Zugkraft in Richtung eines benachbarten Bauteils wirken zu lassen. Verfahrensmäßig ist nach Anspruch 11 vorgesehen, dass wenigstens eine Kernschicht des Bauteils aus einem Gemisch umfassend einen Kunststoff und ein lignozellulosehaltiges Material spritzgegossen wird und dass an wenigstens zwei einander gegenüberliegenden Seitenkanten korrespondierende Verbindungselemente einteilig mit der Kernschicht spritzgegossen werden und dass die Verbindungselemente als Verriegelungsmittel ausgebildet sind, wobei wenigstens an einer Seitenkante ein Verbindungselement mit einer Hinterschneidung zum Verbinden zweier Paneelelemente einteilig mit der Kernschicht spritzgegossen wird. Die vorrichtungsmäßige und die verfahrensmäßige Lösung werden im Folgenden zusammen diskutiert.

Die Verbindungselemente werden nicht mehr wie im Stand der Technik üblich aus dem Rohling herausgefräst, wodurch die Herstellung der Bauteile deutlich vereinfacht werden kann. Die Verbindungselemente werden vielmehr gleichzeitig mit der Kernschicht und zwar im Spritzgussverfahren hergestellt. Ein weiterer Verfahrensschritt zum Herausarbeiten oder Nachbearbeiten der Verbindungselemente ist nicht mehr erforderlich. Im Ergebnis kann bei der Herstellung des Bauteils ein Verfahrensschritt und die mit den dafür üblicherweise verwendeten hochpräzisen Fräswerkzeugen zusammenhängenden Kosten eingespart werden.

Im Zusammenhang mit der Erfindung wurde nämlich überraschend festgestellt, dass der Compound bei entsprechender Wahl der Rohstoffe und der Zusammensetzung solche Materialeigenschaften hinsichtlich der Verwendung im Spritzgussverfahren aufweist, dass selbst filigrane Strukturen wie etwa die von konventionellen Paneelen bekannten Nuten und Federn mit einer sehr hohen Genauigkeit gefertigt werden können. Dies ist notwendig, um ein einwandfreies Verlegen der Paneele zu gewährleisten.

Darüber hinaus besteht eine viel größere Freiheit bei der Ausgestaltung der Verbindungselemente. Bisher weisen die Nuten und Federn von den Bauteilen, egal, ob diese aus einem Compound oder aus einem reinen Holzwerkstoff gebildet sind, entlang der jeweiligen Seitenkante überall die gleiche Querschnittsform auf, da diese Verbindungselemente insbesondere durch Vorbeiführen der Rohlinge an fest installierten Fräswerkzeugen gefertigt werden. Die Erfindung hat nun aber erkannt, dass einerseits diese Restriktion bei der Ausgestaltung von Bauteilen nicht mehr gegeben ist und andererseits hinsichtlich der Funktionalität bevorzugte Verbindungselemente möglich werden. Gleichzeitig kann so auch eine Einsparung von Herstellungskosten bei der Fertigung der entsprechenden Bauteile erreicht werden. Bevorzugte Bauteile lassen sich durch thermoplastische Kunststoffe erzielen. Wenigstens weisen die Kunststoffe zum Zeitpunkt der Formbildung des Bauteils thermoplastische Eigenschaften auf. Als geeignet haben sich beispielsweise alle bekannten Thermoplaste wie Polypropylen (PP), Polyethylen (PE), Polystyrol (PS), Polyester (wie z.B PET) und Acrylnitril-Butadien-Styrol-Mischpolymerisate (ABS) herausgestellt. Darüber hinaus ist auch der Einsatz von Thermoplasten mit noch höheren Schmelzpunkten wie Polyoxymethylen (POM), Polyamid (PA 6,6 und PA 6), oder Polyacrylnitril (PAN) möglich, wobei PAN und PA 6 wegen ihrer polaren Eigenschaften besonders geeignet sind. Auch Kunststoffe mit einem zweistufigen Härtungsmechanismus sind geeignet. Darunter sind im Endhärtungszustand als Durplaste zu bezeichnende Kunststoffe zu verstehen, die in einem Zwischenstadium über thermoplaste Eigenschaften verfügen. Diese Kunststoffe können beispielsweise auf phenolischer oder aminoplaster Basis (Melamin, Harnstoff) sein.

Besonders bevorzugt ist es, wenn als Kunststoff synthetischer Polyester bzw. Polyethylenterephthalat (PET) verwendet wird. Das PET zeichnet sich durch einen hohen Schmelzpunkt (ca. 250°C) aus und verleiht dem Compound die notwendige Wärmestandfestigkeit. Zudem verfügt PET so wie lignozellulosehaltiges Material über polare Eigenschaften, was sich gut ergänzt und eine Oberflächenbeschichtung z.B. durch Lackieren begünstigt. PET ist als Neuware verhältnismäßig teuer, weshalb vorzugsweise auf Abfälle aus der Kunststoffsammlung zurückgegriffen wird. PET wird vielfach als Verpackungsmaterial, insbesondere für Einwegflaschen verwendet, die nach dem Gebrauch gesammelt werden und einer Aufbereitung zugeführt werden. Die Reinigung des PET ist jedoch sehr aufwändig und daher kaum konkurrenzfähig zu Neumaterial. Probleme bereiten insbesondere eingefärbte Flaschen oder auch Füllstoffe, wie sie für undurchsichtige Flaschen verwendet werden. Zudem müssen die Etiketten und die Schraubverschlüsse entfernt werden. Alle diese Unwegsamkeiten der Reinigung spielen für das erfindungsgemäße Bauteil bzw. Verfahren keine Rolle.

Hinsichtlich des lignozellulosehaltigen Materials sind hier alle natürlich wachsenden Rohstoffe, deren Hauptbestandteil Zellulose ist und die zur Strukturfestigung Lignin enthalten, gemeint. Es handelt sich also im Wesentlichen um Material aus ein- und mehrjährigen Pflanzen, bevorzugt Reststoffen aus der agrarischen/landwirtschaftlichen Produktion wie z.B. Stroh, Reisschalen, Kokosnuss, Flachs, Hanf, Bambus, Palmen oder Holz. Es hat sich für die Bezeichnung der Geometrie von diesen organischen Materialien der Begriff "Faser" bei der Produktgruppe von Holzkunstoffverbunden (wood plastic composit = WPC) eingebürgert. Deshalb wird vorliegend unter dem Begriff Faser einerseits faseriges Material, d. h. Fasern im eigentlichen Sinne, und andererseits aber auch Material verstanden, das mehlartig, kubisch, spanartig, flächig, schlank oder faserig sein kann.

Als Massenmischungsverhältnis von Kunststoff zu lignozellulose enthaltendem Material hat sich der Bereich zwischen 20:80 bis 80:20 bewährt. Mit steigendem Kunststoffanteil ergeben sich höhere mechanische Festigkeiten und eine verringerte Wasseraufnahme. Ein höherer Anteil an lignozellulose enthaltendem Material verringert das Schwindmaß und verbessert damit die einhaltbaren Toleranzen. Gleichzeitig verringert sich die erforderliche Nachdruckhöhe und Nachdruckzeit. Ferner kann je nach Mischungsverhältnis das Verhältnis von Stabilität zu Flexibilität des Bauteils beeinflusst werden. In vorteilhafter Weise liegt das Mischungsverhältnis zwischen 70:30 und 30:70, da dann geringere Schwindmaße und Toleranzen bei einer gleichzeitigen Einsparung des verhältnismäßig kostenintensiven Kunststoffs erzielt werden. Erfindungsgemäß liegt das Mischungsverhältnis zwischen 60:40 und 40:60. Hier werden besonders bevorzugte Schwindmaße und Toleranzen erhalten, wobei die Kosten für den Kunststoff begrenzt sind. Ferner erlaubt ein derartiges Mischungsverhältnis einen sehr guten Kompromiss zwischen Flexibilität und Stabilität. Je geringer das Schwindmaß ist, desto filigranere Strukturen der Verbindungselemente können durch Spritzgießen hergestellt werden, wobei Toleranzen von wenigen hundertstel Millimeter ohne weiteres auch bei sehr geringen Taktzeiten erzielt werden können. Die sonst bei Kunststoffen mitunter recht hohen Verarbeitungs- und Nachschwindungen betragen hier lediglich wenige Zehntel Prozent, weswegen keine besondere Nachdruckhöhe- oder zeit erforderlich ist. Zusätzlich wird durch die Verwendung einer derartigen Mischung erreicht, dass die späteren Verbindungselemente hinreichend stabil und gleichzeitig ausreichend flexibel sind.

Je nach eingesetztem Kunststoff, lignozellulosem Material und Massenverhältnis derselben lässt sich eine hervorragende Feuchtebeständigkeit der Bauteile erreichen. So wird beispielsweise eine Kantenquellung der Bauteile erreicht, die nur etwa 10% von jener einer herkömmlichen Faserplatte beträgt. Ein entsprechendes Bauteil eignet sich also auch für den Einsatz in Nassbereichen oder draußen.

Neben den Hauptbestandteilen des Kunststoffes und dem Anteil lignozellulosehaltiger Teilchen können neben Netzmitteln (coupling agent) noch weitere Stoffe wie Additive oder Füllstoffe enthalten sein. Additive dienen der Funktionalisierung der Eigenschaften des Bauteils oder der Verbesserung der Prozessführung. Darunter sind in der Regel Gleitmittel, Additive zur Veränderung der Brandeigenschaften, der Haftungseigenschaften zwischen Kunststoff und Faser, der elektrischen Leitfähigkeit, der Rutscheigenschaften oder der Verklebbarkeit oder zur Veränderung des optischen Erscheinungsbildes zu verstehen.

Füllstoffe dienen in der Regel der Kostenoptimierung. Die Abgrenzung zwischen Füllstoff und Additiv ist oft nur schwer möglich. Zumeist werden Füllstoffe auf anorganischer, bzw. mineralischer Basis eingesetzt. So kommen in Betracht: Talkum, Kreide, Titandioxid, Ziegelstaub und anorganische Färbemittel wie Eisenoxid. Die Vorteile dieser anorganischen Füllstoffe liegen aber auch darin, dass die Verarbeitbarkeit, insbesondere beim Spritzgießen, beeinflusst werden kann. Zudem ist die Feuchtigkeitsbeständigkeit, das spezifische Gewicht und die Farbe des fertigen Bauteils damit einstellbar.

Das beschriebene Gemisch zeichnet sich durch eine besonders hohe Beständigkeit und Dimensionsstabilität bei Feuchtebelastung aus. Die Ursachen für die Verbesserung der Dimensionsstabilität durch Feuchteeinwirkung im Vergleich zum reinen lignozellulosehaltigen Material sind vielschichtig. Zum einen erfährt das lignozellulosehältige Material eine thermische Vergütung. Von Holz beispielsweise ist bekannt, dass bei Temperatureinwirkung vor allem der Abbau von Hemizellulosen stattfindet, wodurch bevorzugte Sorptionsstellen für Wasser fehlen. Hemizellulosen tragen aber überproportional zum Quellen und Schwinden bei, weshalb ein Abbau von diesen die Feuchtestabilität insgesamt entscheidend verbessert. Diese als thermische Vergütung von Holz bekannte Technologie ist altbewährt und kann eigentlich auf jedes Lignozellulosematerial angewandt werden.

Eine weiterer Ursache für die Verbesserung der Dimensionsstabilität kann durch eine Verzögerung des Kapillarwassertransportes oder der Wasserdampfdiffusion innerhalb des Bauteils zu den lignozellulosehaltigen Fasern hin oder von diesen weg erreicht werden. Diese Funktion übernimmt der in der Formmasse befindliche Kunststoffanteil. Erreicht wird das durch Füllen sowohl der inter- als auch intrazellulären Hohlräume der lignozellulosehaltigen Fasern. Zudem kann eine Verbesserung erreicht werden, wenn es gelingt, die Zellwand des lignozellulosehaltigen Fasermaterials mit Kunststoff zu penetrieren. Das ist der Fall, wenn ein geeigneter Kunststoff eingesetzt wird, der über ähnliche polare Eigenschaften wie das Lignozellulosematerial verfügt oder wenn geeignete Netzmittel eingesetzt werden. Zusätzlich kann die Wasseraufnahme durch Additive vermindert werden, die eine Benetzung des lignozellulosen Materials verzögern. Ähnlich wirkende Effekte sind bei Holzwerkstoffen bekannt, wo die Verwendung von hydrophoben Additiven (z.B. Wachse) zum Stand der Technik zählt.

Für die Herstellung der Bauteile stehen grundsätzlich zwei Methoden zur Auswahl. Das lignozellulosehaltige Material, der Kunststoffanteil und etwaige weitere Bestandteile können erst durch einen Extrusionsprozess, in einem Heißmischer, in einem Pelletierer oder einem Agglomerator in ein Granulat übergeführt werden, welches dann durch Spritzguss weiterverarbeitet wird. Es ist aber auch möglich die erfindungsgemäßen Bauteile aus den verschiedenen Bestandteilen ohne vorheriges Behandeln durch Direktspritzguss herzustellen.

Die Grenzen der Bauteilform gibt die Technologie des Spritzgusses vor. Mittels mehrteiliger Werkzeuge lassen sich aber nahezu beliebige Bauteilformen realisieren. Im Vergleich zu linear gefrästen Bauteilen ist die Herstellung von hinterschnittenen Bauteilen problemlos realisierbar. Auch dreidimensionale, sphärische Bauteilformen lassen sich fertigen.

Ein weiterer wesentlicher Unterschied zu den aus dem Stand der Technik bekannten Belagselementen ist, dass hier Elemente mit mechanischen Verbindungsmitteln hergestellt werden können, die nicht auf geradlinige Kantenformen beschränkt sind. Es können vielmehr erstmals Elemente mit beliebigen Umrissen dauerhaft zu einem Belag verbunden werden, solange sich die Elemente mit Hilfe an deren Kanten vorgesehener mechanischer Verriegelungsmittel zu einem flächigen Verbund fügen lassen.

Die Erfindung umfasst in einer bevorzugten Ausbildungsform flächige Bauteile, die an einer Seite, bevorzugt der Oberseite, vorwiegend geschlossen sind und an der Verbindungsmittel angebracht sind, die hinsichtlich der geometrischen Form aber vollkommen frei gestaltbar sind.

Für die Grundstruktur kann darüber hinaus eine löcherige, rippen- bzw. stegartige Form eingesetzt werden, die sich aus Überlegungen der Gewichts- und Materialreduktion ergeben kann oder etwa schalltechnische Zwecke als Ursache hat. Diesbezüglich wird darauf verwiesen, dass das Absorptionsverhalten, das Eigenschwingungsverhalten, das Schallreflexionsverhalten oder auch das Schallschluckvermögen durch spezifische Wahl der Form eines Belagsteiles beeinflussbar ist.

Wesentlicher Vorteil der so erhaltenen Bauteile ist, dass diese auch erhöhten Anforderungen wie etwa in Bezug auf Feuchtebeständigkeit, dem dauerhaften Aufbringen von Beschichtungen oder hinsichtlich der mechanischen Eigenschaften genügt. Unter Beschichtung ist eine Verleihung eines speziellen optischen Erscheinungsbildes des Bauteils zu verstehen, wobei eine zusätzliche Schicht auf die Kernschicht aufgebracht wird. Grundsätzlich können zwei Beschichtungstechnologien unterschieden werden. Erstens das Aufbringen einer Beschichtung im Eingangverfahren direkt in Verbindung mit der Formgebung des Bauteils wie beispielsweise das Hinterspritzen eines Beschichtungsträgers mit dem WPC-Material. Zweitens das Beschichten des Bauteils nach der Formgebung durch den Spritzguss wie z.B. durch ein klassisches Beschichtungsverfahren wie Lackieren (Flüssiglacke und Pulverlack), Folieren, Kaschieren, Aufkleben von Beschichtungsmaterialien oder Bedrucken. Grundsätzlich kann die Beschichtung einfarbig, oder vielfarbig sein. Die Beschichtung kann eine Dekornachbildung (z.B. Holz oder Steinzeug) oder ein Fantasiedekor abbilden.

Unter einem Eingangverfahren wird ein Herstellungsverfahren eines beschichteten Bauteils verstanden, bei dem die Beschichtung des Bauteils im gleichen Arbeitsgang wie die Herstellung des Bauteils bzw. des Beschichtungsträgers selbst erfolgt.

Werden als Beschichtungsmaterial beispielsweise Linoleum oder bedruckte Folien verwendet, ist es möglich ein Bauteil zu schaffen, mit dem die Optik eines herkömmlichen Belags erhalten werden kann, wobei gleichzeitig eine Eignung für feuchtebelastete Bereiche erzielt wird. So kann in einem Gebäude in Bereichen mit normaler Nutzung und in Nassbereichen ein gleich aussehender Belag verlegt werden. Eventuell als störend empfundene Dekorwechsel sind damit nicht mehr erforderlich. Aber nicht nur zwischen Nass- und Trockenbereich kann ein spezifischer Einsatz der Bauteile günstig sein, vielmehr kann es sinnvoll sein, Bereiche mit starker und weniger starker Belastung, wie etwa Lobby und Gangbereich eines Hotels oder auch verschiedene Zonen von Geschäftslokalen, mit den optisch gleichen - in ihrer Widerstandsfähigkeit aber unterschiedlichen - Belägen auszustatten.

Neben den Ausgestaltungsmöglichkeiten der Oberflächen mit Laminat, Lack, Linoleum, Imprägnat oder Folie wäre auch die Anwendung von Leder, Kork, Metallfolie, Karton, Holz bzw. Holzfurnier, textiler Gewebe, Stein, gefärbtem Glas, Mineralwerkstoff, etc. möglich. Grundsätzlich kann jedes Material, das sich als entsprechender Belag für die zu verkleidende Fläche eignet, angewendet werden. Wird dieses durch Hinterspritzen mit dem Bauteil verbunden, kann sich eine kostengünstige Art der Herstellung bieten. Wie ausgeführt können die verschiedenen Beschichtungsmaterialien auch nachträglich durch Verklebung aufgebracht werden.

Die Bauteile können aber auch ohne eine Beschichtung eingesetzt werden. Dabei bietet es sich an durch Füll- oder Farbmittel wie etwa Talkum, Kreide, Ziegelstaub, Carbonate, Silicate, anorganische Pigmente, zu denen Weißpigmente (Titandioxid, Zinkoxid, Zinksulfid, Antimontrioxid), Bleichromate, Bleimolybdate, Cadmiumpigmente, Eisenoxid-Pigmente, Chromoxid-Pigmente und Ultramarin-Pigmente zählen, sowie organische Pigmente wie Monoazo-Pigmente (z.B. C.I. Pigment Brown 25, C.I. Pigment Orange, Diazo-Pigmente, Diazo-Kondensationspigmente, Anthanthronpigmente eine bestimmte Optik zu erreichen. Neben herkömmlichen Farbstoffen wie kationische Farbstoffe, anionische Frabstoffe und Dispersionsfarbstoffe sowie den genannten Füllmitteln bzw. Pigmenten kann die gewünschte Farbgebung auch durch die Verwendung zuvor eingefärbten lignozellulosehaltigen Materials erzielt werden. Die genannten Zusätze können auch ein beschleunigtes Altern der Oberfläche bewirken, wodurch diese eine sogenannte Patina erhalten können. Da hier maßgeblich die Wirkung von UV-Licht zur Farbänderung beiträgt, wird der Kernbereich der Elemente nicht verändert und behält damit auch seine positiven mechanischen Eigenschaften sowie die Beständigkeit gegenüber Feuchte.

Neben der dekorativen Gestaltung der Oberfläche ist es auch möglich, diese mit einer Struktur zu versehen. Dies ist möglich durch Abbildung des Spritzgusswerkzeuges oder durch nachträgliche Veränderung der Oberfläche durch spanlose (z.B. Prägen) oder spanabhebende Bearbeitung (Bürsten, Fräsen).

Je nach vorgesehenem Verwendungszweck kann es aber auch sinnvoll sein, das Bauteil an der nicht zur Ansicht vorgesehenen Fläche mit einer Beschichtung zu versehen. Diesbezüglich wird unter einer Beschichtung eine Schicht verstanden, die eine bestimmte technische Funktion übernehmen soll. Etwa kommen hier Schichten mit schalldämmenden Eigenschaften in Betracht, welche eine Verbesserung der als Fußbodenbelagselemente vorgesehenen Tritt- oder Raumschalleigenschaften ermöglichen sollen, oder können Schichten mit Klebefunktion zum Verbinden der Elemente mit dem Untergrund angebracht sein. Soweit notwendig kann auch die Funktion einer Gegenzugschicht ermöglicht werden, die das Bauteil in Bezug auf die sichtseitig aufgebrachte Schicht in mechanischem Gleichgewicht hält, um ungewüschte Verformungen aus der Ebene zu verhindern. Antistatische Eigenschaften, Beheizung oder Feuchteschutz können weitere Gründe für die Anbringung einer rückseitigen Schicht sein. Auch diese Schichten lassen sich nachträglich, aber auch im Zuge des Spritzvorganges aufbingen, wobei es bei beidseitiger Beschichtung eines Bauteils durch hinterspritzen notwendig sein kann, zumindest eine der Schichten im Bereich der Anspritzpunkte auszusparen. Hinsichtlich der Verbindungselemente ist bei einer weiter bevorzugten Ausgestaltung des Bauteils vorgesehen, dass wenigstens an einer Seitenkante mehrere voneinander beabstandete Verbindungselemente einteilig mit der Kernschicht spritzgegossen sind. Da die Verbindungselemente allein durch Spritzgießen gebildet werden, können diese zur Kostenersparnis auf verhältnismäßig kurze Abschnitte der Seitenkante beschränkt sein. Dadurch kann ggf. auch das Verlegen der Bauteile vereinfacht werden.

An wenigstens einer Seitenkante ist ein Verbindungselement mit einer Hinterschneidung zum formschlüssigen ggf. auch reibschlüssigen Verbinden bzw. Verrasten benachbarter Bauteile einteilig mit der Kernschicht spritzgegossen. Bei geeigneter Zusammensetzung des Compounds kann eine geringfügige Elastizität des Verbindungselements erreicht werden. Dann kann das Verbindungselement beim Verbindungsvorgang an einer Engstelle komprimiert werden. Anschließend dehnt sich das Verbindungselement im Bereich der Hinterschneidung wieder zumindest teilweise aus. Dadurch wird je nach dem, ob es zu einer vollständigen oder lediglich teilweisen Ausdehnung kommt, eine formschlüssige oder reibschlüssige Verbindung geschaffen und ein unbeabsichtigtes Lösen der Bauteile verhindert.

Auch ist vorgesehen, dass auf wenigstens eines von zwei miteinander verbundenen Bauteilen aufgrund einer Deformation eines Verbindungselements, etwa weil keine vollständige Ausdehnung komprimierter Abschnitte im Bereich hinter der Hinterschneidung mangels Platz erfolgen kann, eine Zugkraft in Richtung des benachbarten Bauteils wirkt. Dies ist dann besonders vorteilhaft, wenn die Bauteile mehrfach verwendet werden, weil die Materialeigenschaften erhalten bleiben und kein Materialabrieb die Möglichkeit der Mehrfachnutzung einschränkt.

Auch wenn im Zusammenhang mit den zuvor beschriebenen Verbindungselementen eine horizontale Verbindung bevorzugt ist, kann grundsätzlich auch vorgesehen sein, dass wenigstens an zwei Seitenkanten Verbindungselemente einteilig mit der Kernschicht spritzgegossen sind, die ein Verbinden zweier Bauteile durch eine Relativbewegung senkrecht zur Verlegeebene erlauben. Dies ermöglicht besonders kurze Verlegezeiten und aufgrund der hohen Genauigkeit beim Spritzgießen trotzdem keine oder nur minimale Spaltmaße im verlegten Belag.

Alternativ kann wenigstens an einer Seitenkante ein Verbindungselement mit einem konischen Abschnitt einteilig mit der Kernschicht spritzgegossen sein. Durch die Verwendung des entsprechenden Compounds ist es möglich, ohne einen relevanten Mehraufwand eine Art Bajonettverschluss zu schaffen. Allerdings werden zwei Bauteile dann durch eine Relativbewegung parallel zu den korrespondierenden Seitenkanten miteinander verbunden. Eine Drehbewegung - wie bei Bajonettverschlüssen üblich - ist nicht erforderlich. Mit anderen Worten stellt der konische Abschnitt also eine Art Keil dar, so dass zwei Bauteile miteinander verkeilt werden können. Dabei kann nur an einem der korrespondierenden Verbindungselemente oder an beiden Verbindungselementen ein konischer Abschnitt vorgesehen sein.

Wenn der konische Abschnitt senkrecht zur Oberseite des Bauteils ausgerichtet ist, dann erfolgt eine Verbindung senkrecht zu den verbundenen Seitenkanten, was üblicherweise als horizontale Verbindung bezeichnet wird. Wird dagegen der konische Abschnitt parallel zur Oberseite des Bauteils ausgerichtet, können die Bauteile in einer Richtung senkrecht zur Oberseite bzw. vertikal verbunden werden. Besonders bevorzugt kann es sein, wenn beide Ausgestaltungen kombiniert werden, mithin der konische Abschnitt schräg ausgebildet wird. Auf diese Weise ist eine horizontale und zugleich vertikale Verbindung möglich.

Um die Verlegung der Bauteile zu vereinfachen, können diese symmetrisch ausgebildet bzw. hergestellt sein. Dann sind an zwei aneinander angrenzenden Seitenkanten identische Verbindungselemente einteilig mit der Kernschicht spritzgegossen. Vorzugsweise sind jeweils an zwei über Eck miteinander verbundenen Seitenkanten die Verbindungselemente auch identisch angeordnet. Die Bauteile können dann nämlich sowohl in einer ersten als auch in einer um 90° gedrehten Ausrichtung verlegt werden, was das Verlegen an sich erleichtert.

Je nach Verlegeart kann es weiter zweckmäßig sein, wenn die Bauteile quadratisch ausgebildet sind. Alternativ oder zusätzlich kann auch jede der vier Seitenkanten des Bauteils identisch ausgestaltet sein. Dann müssen zwei benachbarte Paneelelemente immer versetzt zueinander verlegt werden. Ferner bilden jeweils zwei als Federelemente ausgebildete Verbindungselemente zwischen einander ein Nutelement.

Eine weitere Variante des zuvor beschriebenen Bauteils weist an mindestens einer Seitenkante ein Dichtelement auf, dass in den Stoßbereich integriert ist. Dabei wird der obere Stoßbereich bevorzugt. Durch das Dichtelement wird das Eindringen von Feuchtigkeit oder Schmutz zwischen die Bauteile vermieden, so dass einerseits ein Aufquellen des Materials der Kernschicht und andererseits ein auffälliges Verschmutzen des Stoßkantenbereichs vermieden werden kann. Das Dichtelement ist dabei mit dem Bauteil zusammen spritzgegossen, es muss daher nicht nachträglich mit dem Bauteil verbunden werden.

In bevorzugter Weise besteht das Dichtelement aus Kautschuk, Silikon, Butyl oder einem anderen Kunststoff.

Eine weitere Alternative zur Lösung des technischen Problems der vorliegenden Erfindung besteht gemäß Anspruch 9 in einem Bauteil, vorzugsweise für die Verkleidung von Fußböden-, Wänden- und Decken, mit einer Kernschicht, wobei wenigstens die Kernschicht aus einem einen Kunststoff und ein lignozellulosehaltiges Material umfassenden Gemisch gebildet ist und wobei die Kernschicht an wenigstens zwei der einander gegenüberliegenden Seitenkanten korrespondierende Verbindungselemente aufweist, wobei mindestens ein Verbindungselement aus einem vom Material der Kernschicht verschiedenen Material besteht und mit der Kernschicht durch Spritzguss dauerhaft verbunden ist, wobei ein Gemisch mit einem Massenmischungsverhältnis der Anteile von Kunststoff zu lignozellulosehaltigen Material im Bereich zwischen 60:40 und 40:60 verwendet wird, wobei das Gemisch Netzmittel aufweist, wobei wenigstens an einer Seitenkante ein Verbindungselement mit einer Hinterschneidung zum Verbinden zweier Bauteile einteilig mit der Kernschicht spritzgegossen ist und wobei die Verbindungselemente dafür eingerichtet sind, aufgrund einer Deformation eines Verbindungselements eine Zugkraft in Richtung eines benachbarten Bauteils wirken zu lassen.

Somit können die Vorteile des Spritzgießens des Bauteils auch dann ausgenutzt werden, wenn die Eigenschaften des Materials der Kernschicht weniger gut für das Ausbilden der Verbindungselemente, insbesondere hinsichtlich der Elastizitätseigenschaften geeignet sind. Somit können entweder die Federseitenkante oder die Nutseitenkante ein solches Verbindungselement aufweisen. In einer weiteren Alternative sind alle Verbindungselemente des Bauteils aus einem vom Kernmaterial verschiedenen Werkstoff hergestellt.

Die zuvor erläuterte Variante weist ebenfalls den Vorteil auf, dass nach der Herstellung des Bauteils keine Nachbearbeitung erforderlich ist. Lediglich zur Herstellung des Bauteils ist es erforderlich, das separate Verbindungselement in der Spritzgussform an die vorgesehene Position anzuordnen, damit es während des Spritzgießens einen Verbund mit der Kernschicht eingehen kann.

Das Verbindungselement besteht vorzugsweise aus einem elastisch verformbaren Kunststoffmaterial, beispielsweise einem entsprechend eingestellten Thermoplast wie Polyethylen oder Polypropylen, oder einem Elastomer wie EPDM (Ethylen-Propylen-Dien-Kautschuk) oder Neopren (Chloropren-Kautschuk).

Im Folgenden wird die Erfindung anhand einer lediglich bevorzugte Ausführungsbeispiele darstellenden Zeichnung erläutert. In der Zeichnung zeigen
- Fig. 1: korrespondierende Verbindungselemente eines ersten bevorzugten Ausführungsbeispiels des Bauteils in Seitenansicht,
- Fig. 2: eine Seitenkante eines zweiten bevorzugten Ausführungsbeispiels des Bauteils in perspektivischer Ansicht,
- Fig. 3: eine Seitenkante eines dritten bevorzugten Ausführungsbeispiels des Bauteils in Draufsicht,
- Fig. 4: eine Seitenkante eines vierten bevorzugten Ausführungsbeispiels des Bauteils in perspektivischer Ansicht,
- Fig. 5A bis H: unterschiedliche Varianten eines fünften bevorzugten Ausführungsbeispiels des Bauteils in Draufsicht,
- Fig. 6A und B: zwei Varianten eines sechsten bevorzugten Ausführungsbeispiels des Bauteils in perspektivischer Ansicht,
- Fig. 7A und B: zwei Varianten eines siebten bevorzugten Ausführungsbeispiels des Bauteils in perspektivischer Ansicht,
- Fig. 8: ein Bauteil mit einem Dichtungselement,
- Fig. 9: ein Bauteil mit einem Federelement, das aus einem von der Kernschicht verschiedenen Material hergestellt ist,
- Fig. 10: ein Bauteil mit einem Nutelement, das aus einem von der Kernschicht verschiedenen Material hergestellt ist und
- Fig. 11: ein Bauteil mit einem Federelement und einem Nutelement, die aus einem von der Kernschicht verschiedenen Material hergestellt sind.

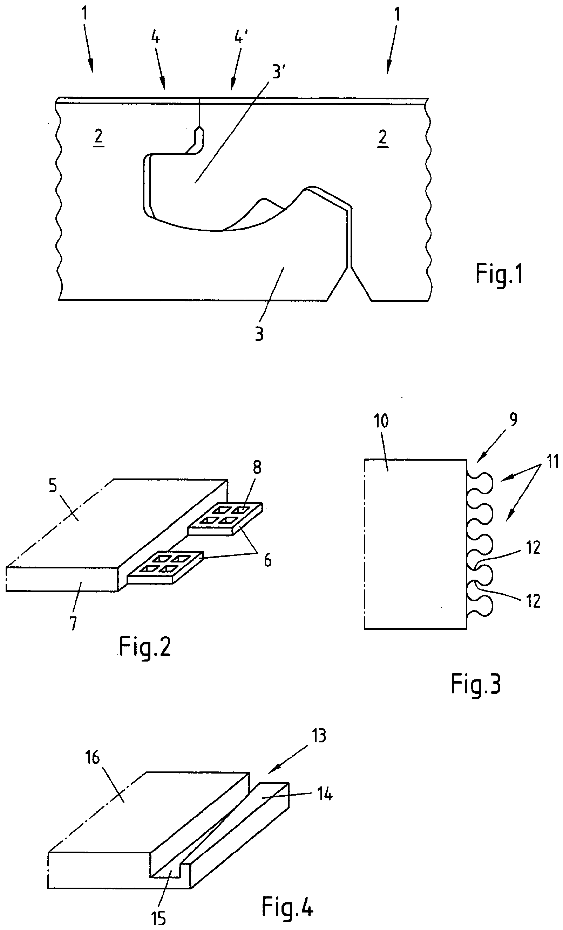

In Fig. 1 ist ein Ausführungsbeispiel eines Bauelements 1 mit einer Kernschicht 2 und einer darauf angeordneten Laminatschicht veranschaulicht. Die dargestellten korrespondierenden Verbindungselemente 3, 3' sind hinsichtlich der Formgebung und der Abmessungen an sich bekannt.

Der wesentliche Unterschied des in Fig. 1 veranschaulichten Bauteils 1 zu den bekannten Belagsmaterialien liegt in den einteilig mit der Kernschicht 2 spritzgegossenen Verbindungselementen 3, 3' in Form einer Nut bzw. einer Feder. Aus der Darstellung der Fig. 1 ist der Unterschied zu einem durch Fräsen hergestellten Verbindungselement zwar nicht erkennbar. Dennoch erkennt der Fachmann den Unterschied bei realen Bauteilen in der Regel auf den ersten Blick.

Die in Fig. 1 dargestellten Verbindungselemente 3, 3' ermöglichen das Verlegen benachbarter Bauteile 1 über einen Zwischenschritt. Dazu werden die Bauteile 1 in einem ersten Teilschritt in eine Position gebracht, in der die Vertiefung der Feder mit dem Vorsprung der Nut in Eingriff steht. Bei dieser Zwischenposition handelt es sich um eine sogenannte Einhebelposition, in der die beiden Bauteile 1 eine definierte Position zueinander einnehmen und bereits teilweise miteinander in Eingriff stehen. Anschließend wird durch Anwinkeln und Zusammenschieben der Bauteile 1 (Einhebeln) die endgültige Position erreicht. Dabei bleiben die Seitenkanten 4, 4' der Bauteile 1 in Kontakt, wodurch die Handhabung beim Verlegen der Bauteile 1 erleichtert wird. Nicht im Einzelnen dargestellt sind die weiteren Seitenkanten des Bauteils 1, welche ebenfalls in an sich bekannter Weise über wiederum korrespondierende Verbindungselemente miteinander verbunden werden können. Die Verbindung dieser weiteren Seitenkanten, bei denen es sich vorwiegend um die kürzeren Seitenkanten der Bauteile 1 handelt, erlaubt eine Verschiebung der Bauteile 1 parallel zu den miteinander verbundenen Seitenkanten. Dadurch wird letztlich das Einhebeln eines beim Verlegen eines Belags neu hinzukommenden Bauteils ermöglicht. Im Gegensatz dazu bilden die in Fig. 1 dargestellten Verbindungselemente ein sogenanntes Schnappprofil.

In Fig. 2 ist eine Seitenkante eines Bauteils 5 dargestellt, an der einzelne Verbindungselemente 6 durch einteiliges Spritzgießen mit der Kernschicht 7 des Bauteils 5 vorgesehen sind. Je nach Anwendungsfall können mehr oder weniger Verbindungselemente 6 an einer Seitenkante vorgesehen sein. Ohne dass dies erforderlich wäre, sind in den einzelnen Verbindungselementen 6 Aussparungen 8 vorgesehen, in die entsprechende Vorsprünge an der Unterseite eines korrespondierenden Verbindungselements eingreifen. Vorzugsweise kommt es dabei durch eine senkrechte Relativbewegung zum Verrasten der beiden Bauteile 5. Ferner wird ersichtlich, dass bei den Bauteilen 5, wie sie in Fig. 2 angedeutet sind, die Begriffe Nut und Feder nicht immer ohne weiteres klar voneinander zu unterscheiden sind, weil jedes der korrespondierenden Verbindungselemente dieser Art in das jeweils andere Verbindungselement eingreift.

Die Fig. 3 zeigt eine Seitenkante 9 eines dritten bevorzugten Ausführungsbeispiels des Bauteils 10 in Draufsicht. Die einzelnen Verbindungselemente 11 sind rotationssymmetrisch ausgebildet und weisen Hinterschneidungen 12 auf. Werden die Verbindungselemente 11 nun in korrespondierende Verbindungselemente mit einer korrespondierenden Hinterschneidung eingeführt, sind beide Bauteile 10 dauerhaft miteinander verbunden. Dabei kann der Abstand der Hinterscheidung 12 von der Seitenkante 9 bei den als Feder ausgebildeten Verbindungselementen 11 kleiner sein als bei den als Nut ausgebildeten Verbindungselementen. Dann wirkt zwischen zwei miteinander verbundenen Bauteilen eine Kraft, welche beide Bauteile zueinander zieht. Im Bedarfsfall können die Verbindungselemente auch rotationssymmetrisch ausgebildet sein.

In Fig. 4 ist eine Seitenkante 13 mit einem Verbindungselement 14 dargestellt, welches einen konischen Abschnitt 15 aufweist. An der dem Bauteil 16 zugewandten Seite des konischen Abschnitts 15 schließt sich diesem eine Aussparung an, in die ein Abschnitt eines korrespondierenden Verbindungselements eingreifen kann, der vorzugsweise ebenfalls konisch ausgebildet ist. Durch eine Relativbewegung der zu verbindenden Bauteile 16 parallel zur entsprechenden Seitenkante 13 "verkeilen" die beiden Bauteile 16 gegeneinander und es kommt zu einer reibschlüssigen Verbindung.

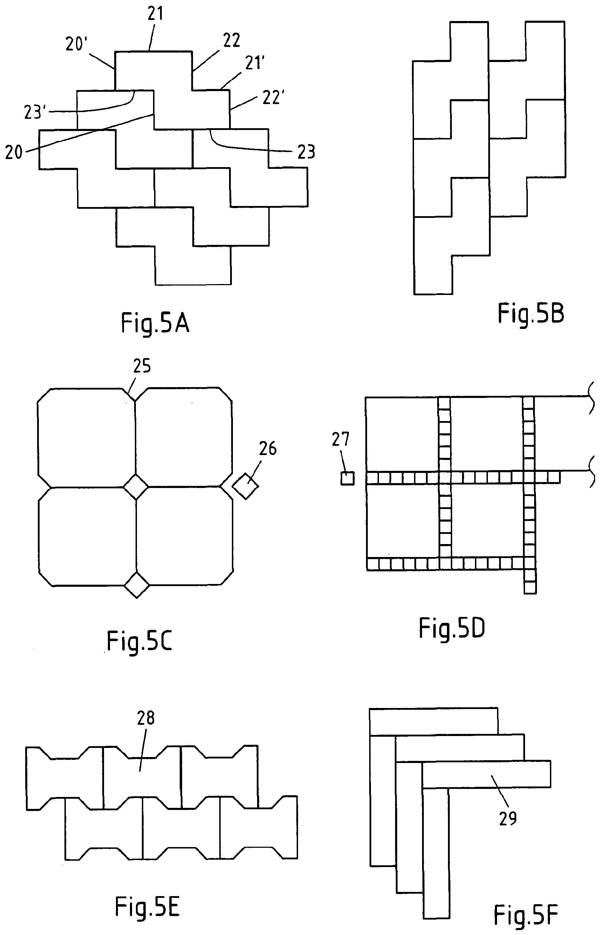

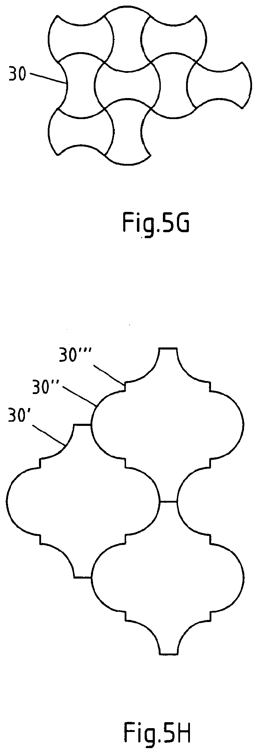

Bei einer ebenfalls bevorzugten Ausführungsform des Bauteils, von dem in der Fig. 5 neun verschiedene Varianten dargestellt sind, wird von einer rein rechteckigen oder quadratischen Formgebung abgewichen, ohne dass dabei die Verbindung der Bauteile untereinander merklich beeinträchtigt wird. Da die Verbindungselemente einteilig mit dem Kern spritzgegossen sind, müssen die Bauteile nicht mehr durchgängig gerade Seitenkanten aufweisen. Diese können beispielsweise Knicke aufweisen (vgl. Fig. 5A und 5B), wobei bedarfsweise die in der Zeichenebene nach oben und nach links weisenden Abschnitte 20, 20', 21, 21' der Seitenkanten mit einer Nut und die nach unten und nach rechts weisenden Abschnitte 22, 22', 23' 23' der Seitenkanten mit einer Feder versehen sind. Würden die Verbindungselemente gefräst, wären solche Formen nicht oder nicht mit einem vertretbaren Aufwand möglich.

Auch können die Bauteile an einigen Ecken 25 abgeschrägt sein, ohne dass hierzu ein Drehen der Bauteile und ein anschließender zweiter Fräsprozess erforderlich ist (vgl. Fig. 5 C). Ebenso können kleine Zwischenstücke 26, 27 problemlos hergestellt werden, da eine Vielzahl solcher Zwischenstücke gleichzeitig spritzgegossen werden kann (vgl. Fig. 5D). Ein umständliches Aussägen dieser Zwischenstücke 26, 27 aus einem größeren Rohling ist nicht erforderlich.

Eine Variante 28 der hier beschriebenen Ausführungsform eines Bauteils kann typischen Formen von Pflastersteinen nachempfunden sein (vgl. Fig. 5E). Wird eine entsprechende Steinoptik auf die Kernschicht aufgebracht, kann das Bauteil als Ersatz zu Pflastersteinen eingesetzt werden.

Ohne großen Verlegeaufwand ist es bisher nicht möglich ein Fischgrätenmuster zu erzeugen, das höchsten Ansprüchen genügt. Übliche Paneelelemente sind nämlich stets rechteckig und umfassen eine Mehrzahl von Stäben. Das Muster wird also aus Rechtecken zusammengesetzt, die nicht mit den einzelnen Stäben identisch sind. Das Bauteil 29 kann aber ohne weiteres die Form annehmen, die mehrere zusammengefügte Stäbe des Fischgrätenmusters annehmen würden (vgl. Fig. 5F).

Die Bauteile können ohne weiteres auch gebogene Seitenkanten 30 aufweisen, wie in Fig. 5G veranschaulicht ist. Zudem ist es möglich, geschwungene und eckige Abschnitte 30, 30', 30' der Seitenkanten bei ein und dem selben Bauteil miteinander zu kombinieren (vgl. Fig. 5H). Dabei ist es jedoch bevorzugt, wenn die Verbindungselemente nicht vollständig umlaufend angeordnet sind, sondern nur abschnittsweise vorhanden sind. Diese Abschnitte können sich an den Position der eckigen und der gebogenen Abschnitte der Seitenkanten orientieren. Dies muss aber nicht der Fall sein.

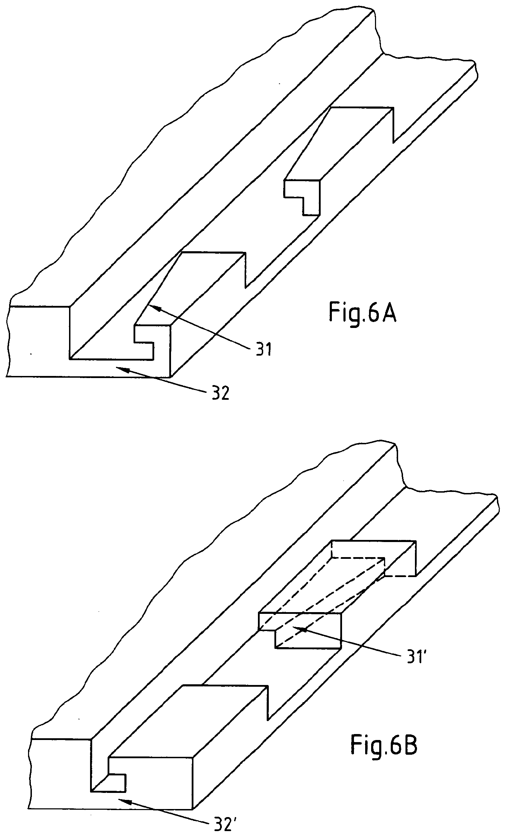

Bei einer weiteren bevorzugten Ausführungsform des Bauteils sind an den einander gegenüberliegenden Seitenkanten jeweils mehrere voneinander beabstandete Verbindungselemente vorgesehen, wobei jeweils ein schräg zur Längsrichtung der Seitenkante verlaufender Abschnitt 31, 31' vorgesehen ist. Im Falle der Fig. 6A ist ein Teil des Verbindungselementabschnitts vorgesehen, der sich von der Vorderseite des Verbindungselements parallel zu einer unteren Lippe 32 in Richtung der Kernschicht des Bauteils hin erstreckt. Das der Kernschicht zugewandte freie Ende weist die Abschrägung auf.

Im Falle der Fig. 6B ist eine Hinterschneidung vorgesehen, wobei der schräg zur Längsrichtung der Seitenkante verlaufender Abschnitt 31' zwischen der unteren Lippe 32' und dem sich von der vorderen Seite des Verbindungselements parallel zur Lippe in Richtung der Kernschicht erstreckenden Teil des Verbindungselements angeordnet ist. Bei den in den Fig. 6A und 6B dargestellten Bauteilen erfolgt ein Verbinden benachbarter Bauteile durch eine Verschiebung parallel zu den entsprechenden Seitenkanten.

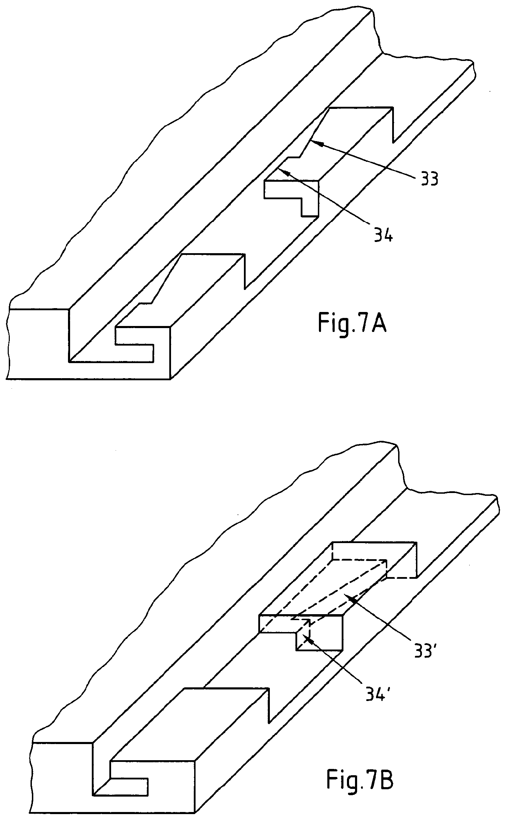

In den Fig. 7A und 7B weisen die dargestellten Bauteile die Verbindungselemente aus den Fig. 6A und 6B mit dem Unterschied auf, dass die Abschrägungen 33, 33' sich nicht über die gesamte Länge eines Verbindungselementabschnitts erstrecken, sondern nur bis zu einer jeweils endseitig angeordneten Rastnase 34, 34'. Die Rastnase kann nach belieben, wie in Fig. 7A gezeigt, gegenüber der benachbarten Abschrägung etwas in Richtung der Kernschicht hervorstehen oder in die entgegengesetzte Richtung zurückversetzt sein, wie dies in der Fig. 7B dargestellt ist.

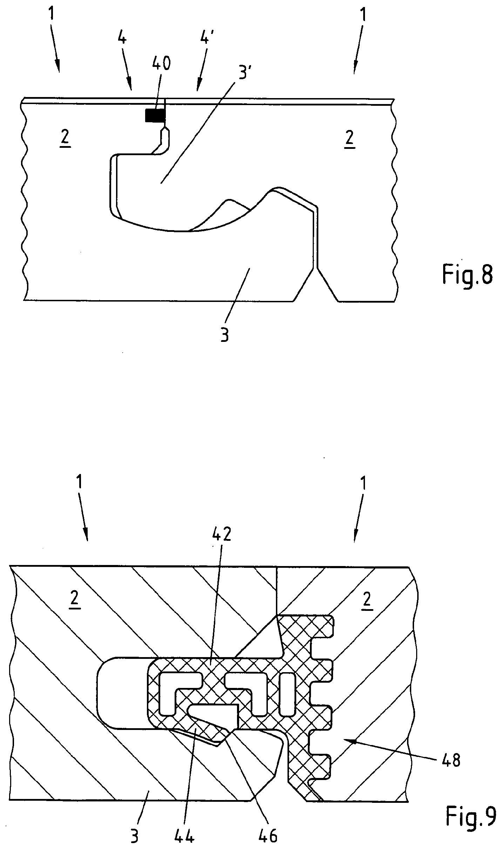

Fig. 8 zeigt ein Bauteil, das dem in Fig. 1 dargestellten Bauteil entspricht, daher sind gleiche Elemente mit gleichen Bezugszeichen versehen. Im Unterschied zum ersten Ausführungsbeispiel ist im oberen Stoßbereich der Seitenkante des Bauteils 4 ein Dichtelement 40 vorgesehen, das in den Stoßbereich integriert ist. Dazu ist während des Spritzgussvorgangs das Dichtelement 40 an der vorgesehenen Position angeordnet worden und vom spritzgegossenen Material umschlossen worden.

Das Dichtelement 40 steht ein wenig über die Seitenkante 4 hinaus, so dass es nach dem Verbinden der beiden Bauteile einer abdichtenden Anlage an der Seitenkante 4' kommt. Dadurch wird die abdichtende Wirkung des Dichtelements hervorgerufen. Zusätzlich kann das Dichtelement auch bis an die Oberfläche des Bauteils reichen oder sogar ein wenig über diese hervorragen.

Damit lassen sich einerseits optische Effekte erzielen, andererseits kann so bei Ausbildung einer zusätzlichen Lippe, die den Fugenbereich vollständig überdeckt, das Eindringen von Feuchtigkeit oder Schmutz dauerhaft vermieden werden. Die Beständigkeit gegenüber Feuchtebelastung kann damit nochmals weiter erhöht werden.
Das Dichtelement 40 kann aus einem der Materialien Kautschuk, Silikon, Butyl oder einem anderen Kunststoff bestehen.

Die Fig. 9 bis 11 zeigen Ausführungsbeispiele für Bauteile, die sich von den zuvor erläuterten Bauteilen in der Ausgestaltung mindestens eines Verbindungselements unterscheiden, wobei eine Reihe von Merkmalen unverändert bleibt. Daher bezeichnen gleiche Bezugszeichen gleiche Elemente, wie sie zuvor anhand der Ausführungsbeispiele bereits beschrieben worden sind.

Das Bauteil 1 nach Fig. 9 besteht ebenfalls aus einer Kernschicht 2, die in gleicher Weise hergestellt worden ist, wie es zuvor anhand der weiteren Ausführungsbeispiele beschrieben worden ist. Das links dargestellte Bauteil 1 weist eine Seitenkante 4 mit einer Nut auf, die aus einer oberen Lippe und einer unteren Lippe besteht. Das rechts dargestellte Bauteil 1 weist ein Verbindungselement 42 in Form einer Feder auf, das aus einem vom Material der Kernschicht verschiedenen Material besteht und mit der Kernschicht 2 durch Spritzguss dauerhaft verbunden ist.

Die Feder 42 ist mit einem nach unten vorstehenden Rastelement 44 versehen, das im zusammengefügten Zustand in einer Vertiefung 46 eingerastet ist, die in der unteren Lippe der Nut 3 ausgebildet ist. Das Rastelement 44 ist dazu elastisch ausgebildet, so dass es während des Zusammenschiebens der beiden Bauteile 1 zunächst nach oben gebogen werden kann, bevor es in die Vertiefung einrastet.

Wie Fig. 9 weiterhin zeigt, ist das Verbindungselement 42 als Hohlprofil ausgebildet und kann somit mittels Stranggussverfahren oder durch einen Extrusionsprozess hergestellt werden. Vor einer Herstellung des Bauteils 1 wird das Verbindungselement 42 in die entsprechende Position innerhalb der Spritzgussform eingelegt und anschließend wird das Bauteil 1 durch Einspritzen des Materials fertig gestellt, wie es oben beschrieben worden ist. Durch die Verzahnung 48 wird ein fester Verbund zwischen der Kernschicht 2 und dem Verbindungselement 42 begünstigt.

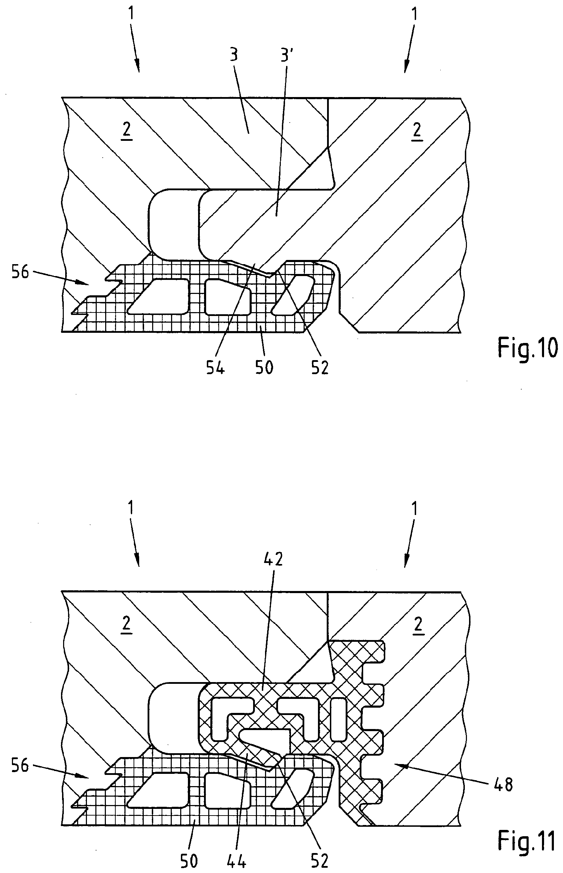

Fig. 10 zeigt ein weiteres Ausführungsbeispiel eines Bauteils, wie es in Fig. 9 dargestellt ist. Hier ist die untere Lippe 50 der Nut 3 aus einem Material hergestellt worden, das vom Material der Kernschicht 2 verschieden ist. Auch hierbei handelt es sich um ein Hohlprofil. Das Verbindungselement 50, also die untere Lippe weist eine Vertiefung 52 auf, in die eine Rastnase 54, die an der Feder 3' ausgebildet ist, im verbundenen Zustand eingreift.

Das Verbindungselement 50 ist elastisch ausgebildet, so dass sich die untere Lippe während des Zusammenschiebens der beiden Bauteile 1 nach unten durchbiegen kann, bis die Rastnase 52 in die Vertiefung 54 einschnappt.

Auch das Verbindungselement 50 weist eine Verzahnung 56 auf, um einen festen Verbund zwischen Kernschicht 2 und dem Verbindungselement 50 zu begünstigen.

Fig. 11 zeigt eine Kombination der beiden zuvor beschriebenen Ausführungsbeispiele. Hierbei sind sowohl beim rechten Bauteil 1 die Feder 42 als auch beim linken Bauteil 1 die untere Lippe 50 aus einem vom Kernmaterial verschiedenen Material hergestellt. Im verbundenen Zustand greift dann das Rastelement 44 in die Vertiefung 52 ein.

Weiterhin ist es neben den in den Figuren gezeigten Ausführungsformen natürlich auch möglich Verbindungselemente aus einem vom Kernmaterial verschiedenen Material vorzusehen, die nicht über die gesamte Länge einer Kante erstreckt sind. Vielmehr kann es vorteilhaft sein, sinngemäß solche Verbindungselemente vorzusehen, wie sie in Figur 2 dargestellt sind.

Die Verbindungselemente 42 und 50 bestehen in bevorzugter Weise aus einem elastisch verformbaren Kunststoffmaterial, beispielsweise einem entsprechend eingestellten Thermoplast wie Polyethylen oder Polypropylen, oder einem Elastomer wie EPDM (Ethylen-Propylen-Dien-Kautschuk) oder Neopren (Chloropren-Kautschuk).

## Patentansprüche

1. Bauteil, vorzugsweise für die Verkleidung von Fußböden-, Wänden- und Decken,
- mit einer Kernschicht (2, 7),
- wobei wenigstens die Kernschicht (2, 7) aus einem einen Kunststoff und ein lignozellulosehaltiges Material umfassenden Gemisch gebildet ist,
- wobei die Kernschicht (2, 7) an wenigstens zwei der einander gegenüberliegenden Seitenkanten (4, 4', 9, 13) korrespondierende Verbindungselemente (3, 3', 6, 11, 14) aufweist und
- wobei die Verbindungselemente (3, 3', 6, 11, 14) einteilig mit der Kernschicht (2, 7) spritzgegossen sind und die Verbindungselemente (3, 3', 6, 11, 14) als Verriegelungsmittel ausgebildet sind,
**dadurch gekennzeichnet,**
- **dass** ein Gemisch mit einem Massenmischungsverhältnis der Anteile von Kunststoff zu lignozellulosehaltigen Material im Bereich zwischen 60:40 und 40:60 verwendet wird,
- **dass** das Gemisch Netzmittel aufweist und
- **dass** wenigstens an einer Seitenkante (9) ein Verbindungselement (11) mit einer Hinterschneidung (12) zum Verbinden zweier Bauteile (10) einteilig mit der Kernschicht spritzgegossen ist,
- wobei die Verbindungselemente (3, 3', 6, 11, 14) dafür eingerichtet sind, aufgrund einer Deformation eines Verbindungselements (3, 3', 6, 11, 14) eine Zugkraft in Richtung eines benachbarten Bauteils wirken zu lassen.

2. Bauteil nach Anspruch 1,
**dadurch gekennzeichnet,**
**dass** die Verbindungselemente wenigstens abschnittsweise schräg zur Längsrichtung der Verbindungselemente verlaufende Kanten aufweisen.

3. Bauteil nach Anspruch 1 oder 2,
**dadurch gekennzeichnet,**
**dass** wenigstens an einer Seitenkante (9) mehrere voneinander beabstandete Verbindungselemente (6, 11) einteilig mit der Kernschicht (7) spritzgegossen sind.

4. Bauteil nach einem der Ansprüche 1 bis 3,
**dadurch gekennzeichnet,**
**dass** wenigstens an zwei Seitenkanten Verbindungselemente (6) zum Verbinden zweier Bauteile (5) durch eine Relativbewegung senkrecht zur Verlegeebene einteilig mit der Kernschicht (7) spritzgegossen sind.

5. Bauteil nach einem der Ansprüche 1 bis 3,
**dadurch gekennzeichnet,**
**dass** wenigstens an einer Seitenkante (13) ein Verbindungselement (14) mit einem konischen Abschnitt (15) zum Verbinden zweier Bauteile (16) durch eine Relativbewegung parallel zu der Seitenkante (13) einteilig mit der Kernschicht spritzgegossen ist.

6. Bauteil nach Anspruch 5,
**dadurch gekennzeichnet,**
**dass** der konische Abschnitt (15) senkrecht oder parallel zur Oberseite des Bauteils (16) ausgerichtet ist.

7. Bauteil nach einem der Ansprüche 1 bis 6,
**dadurch gekennzeichnet,**
**dass** an zwei aneinander angrenzenden Seitenkanten identische Verbindungselemente einteilig mit der Kernschicht spritzgegossen sind.

8. Bauteil nach einem der Ansprüche 1 bis 7,
**dadurch gekennzeichnet,**
**dass** an mindestens einer Seitenkante ein Dichtelement in den Stoßbereich integriert ist.

9. Bauteil, vorzugsweise für die Verkleidung von Fußböden-, Wänden- und Decken,
- mit einer Kernschicht (2, 7),
- wobei wenigstens die Kernschicht (2, 7) aus einem einen Kunststoff und ein lignozellulosehaltiges Material umfassenden Gemisch gebildet ist und
- wobei die Kernschicht (2, 7) an wenigstens zwei der einander gegenüberliegenden Seitenkanten (4, 4') korrespondierende Verbindungselemente (42, 50) aufweist und
- wobei mindestens ein Verbindungselement (42, 50) aus einem vom Material der Kernschicht (2, 7) verschiedenen Material besteht und mit der Kernschicht (2, 7) durch Spritzguss dauerhaft verbunden ist und die Verbindungselemente als Verriegelungsmittel ausgebildet sind,
**dadurch gekennzeichnet,**
**dass** ein Gemisch mit einem Massenmischungsverhältnis der Anteile von Kunststoff zu lignozellulosehaltigen Material im Bereich zwischen 60:40 und 40:60 verwendet wird,
- **dass** das Gemisch Netzmittel aufweist und
- **dass** wenigstens an einer Seitenkante (9) ein Verbindungselement (11) mit einer Hinterschneidung (12) zum Verbinden zweier Bauteile (10) einteilig mit der Kernschicht spritzgegossen ist,
- wobei die Verbindungselemente (3, 3', 6, 11, 14) dafür eingerichtet sind, aufgrund einer Deformation eines Verbindungselements (3, 3', 6, 11, 14) eine Zugkraft in Richtung eines benachbarten Bauteils wirken zu lassen.

10. Bauteil nach Anspruch 9,
**dadurch gekennzeichnet,**
**dass** das mindestens eine Verbindungselement (42, 50) zumindest teilweise elastisch ausgebildet ist.

11. Verfahren zur Herstellung eines Bauteils nach einem der Ansprüche 1 bis 8, vorzugsweise für Fußboden-, Wand- und Deckenbeläge,
- bei dem wenigstens eine Kernschicht des Bauteils aus einem Gemisch umfassend einen Kunststoff und ein lignozellulosehältiges Material spritzgegossen wird,
- bei dem an wenigstens zwei einander gegenüberliegenden Seitenkanten korrespondierende Verbindungselemente einteilig mit der Kernschicht spritzgegossen werden und
- bei dem die Verbindungselemente als Verriegelungsmittel ausgebildet sind, wobei wenigstens an einer Seitenkante ein Verbindungselement mit einer Hinterschneidung zum Verbinden zweier Paneelelemente einteilig mit der Kernschicht spritzgegossen wird.

12. Verfahren nach Anspruch 11,
**dadurch gekennzeichnet,**
**dass** wenigstens an einer Seitenkante mehrere voneinander beabstandete Verbindungselemente einteilig mit der Kernschicht spritzgegossen werden.

13. Verfahren nach Anspruch 11 oder 12,
**dadurch gekennzeichnet,**
**dass** wenigstens an zwei Seitenkanten ein Verbindungselement zum Verbinden zweier Bauteile durch eine Relativbewegung senkrecht zur Verlegeebene einteilig mit der Kernschicht spritzgegossen wird.

## Claims

1. Component, preferably for the cladding of floors, walls and ceilings,
- having a core layer (2, 7),
- wherein at least the core layer (2, 7) is formed from a mixture comprising a plastic and a lignocellulose-containing material,
- wherein the core layer (2, 7) has corresponding connection elements (3, 3', 6,11, 14) or at least two of the opposing side edges (4, 4', 9, 13) and
- wherein the connection elements (3, 3', 6, 11, 14) are injection-moulded in one piece with the core layer (2, 7) and the connection elements (3, 3', 6, 11, 14) are configured as locking means,
**characterised in that**
- a mixture is used with a mass mixture ratio of the proportions of plastic to lignocellulose-containing material in the range between 60:40 and 40:60,
- the mixture has wetting agents and
at least at one side edge (9) a connection element (11) with an undercut (12) to connect two components (10) is injection-moulded in one piece with the core layer,
- wherein the connection elements (3, 3', 6, 11, 14) are designed to allow a tensile force based on a deformation of a connection element (3, 3', 6, 11, 14) to act in the direction of an adjacent component.

2. Component according to Claim 1, **characterised in that** the connection elements have, at least in sections, edges running inclined to the longitudinal direction of the connection elements.

3. Component according to Claim 1 or 2, **characterised in that** at least at one side edge (9), a plurality of connection elements (6,11) spaced apart from each other are injection-moulded in one piece with the core layer (7).

4. Component according to any one of Claims 1 to 3, **characterised in that** at least at two side edges, connection elements (6) to connect two components (5) by a relative movement perpendicular to the installation plane are injection-moulded in one piece with the core layer (7).

5. Component according to any one of Claims 1 to 3, **characterised in that** at least at one side edge (13) a connection element (14) with a conical section (15) to connect two components (16) by a relative movement parallel to the side edge (13) is injection-moulded in one piece with the core layer (7).

6. Component according to Claim 5, **characterised in that** the conical section (15) is oriented perpendicular or parallel to the upper side of the component (16).

7. Component according to any one of Claims 1 to 6, **characterised in that** identical connection elements are injection-moulded in one piece with the core layer (7) at two side edges adjoining each other.

8. Component according to any one of Claims 1 to 7, **characterised in that** a seal element is integrated into the impact region at at least one side edge.

9. Component, preferably for the cladding of floors, walls and ceilings,
- having a core layer (2, 7),
- wherein at least the core layer (2, 7) is formed from a mixture comprising a plastic and a lignocellulose-containing material and
- wherein the core layer (2, 7) has corresponding connection elements (42, 50) at at least two of the opposing side edges (4, 4') and
- wherein at least one connection element (42, 50) consists of a material that is different from the material of the core layer (2, 7) and is permanently connected to the core layer (2, 7) by injection moulding and the connection elements are configured as locking means,
**characterised in that**
a mixture is used with a mass mixture ratio of the proportions of plastic to lignocellulose-containing material in the range between 60:40 and 40:60,
- the mixture has wetting agents and
- at least at one side edge (9) a connection element (11) with an undercut (12) to connect two components (10) is injection-moulded in one piece with the core layer,
- wherein the connection elements (3, 3', 6,11,14) are designed to allow a tensile force based on a deformation of a connection element (3, 3', 6,11,14) to act in the direction of an adjacent component.

10. Component according to Claim 9, **characterised in that** the at least one connection element (42, 50) is configured at least partially elastically.

11. Method for manufacturing a component according to any one of Claims 1 to 8, preferably for floors, walls and ceiling coverings,
- in which at least one core layer of the component is injection-moulded from a mixture comprising a plastic and a lignocellulose-containing material,
- in which corresponding connection elements are injection-moulded in one piece with the core layer at at least two opposing side edges and
- in which the connection elements are configured as locking means,
wherein at least at one side edge, a connection element with an undercut to connect two panel elements is injection-moulded in one piece with the core layer.

12. Method according to Claim 11, **characterised in that** at least at one side edge, a plurality of connection elements spaced apart from each other are injection-moulded in one piece with the core layer.

13. Method according to Claim 11 or 12, **characterised in that** at least at two side edges a connection element to connect two components by a relative movement perpendicular to the installation plane is injection-moulded in one piece with the core layer.

## Revendications

1. Composant, de préférence pour le revêtement de sols, murs et plafonds,
- avec une couche de coeur (2, 7),
- sachant qu'au moins la couche de coeur (2, 7) consiste en un mélange de matière synthétique et de matériau contenant de la cellulose ligneuse,
- sachant que la couche de coeur (2, 7) est dotée, sur au moins deux bords latéraux opposés (4, 4', 9, 13), d'éléments de liaison (3, 3', 6, 11, 14) correspondants, et
- sachant que les éléments de liaison (3, 3', 6, 11, 14) sont moulés par injection d'une pièce avec la couche de coeur (2, 7) et que les éléments de liaison (3, 3', 6, 11, 14) sont réalisés en forme de moyens de verrouillage,
**caractérisé en ce que**
- l'on utilise un mélange de matière synthétique et de matériau contenant de cellulose ligneuse dans un rapport de mélange situé dans un domaine de 60 : 40 et de 40 : 60,
- le mélange présente un moyen de réticulation et
- au moins sur un bord latéral (9), un élément de liaison (11), doté d'une contre-dépouille (12), pour la liaison de deux composants (10), est moulé par injection d'une pièce avec la couche de coeur,
- sachant que les éléments de liaison (3, 3', 6, 11, 14) sont aménagés afin que, suite à une déformation d'un élément de liaison (3, 3', 6, 11, 14), une force de traction agisse dans la direction d'un composant voisin.

2. Composant selon la revendication 1,
**caractérisé en ce que** les éléments de liaison sont dotés, au moins par sections, de bords qui s'étendent en biais par rapport au sens de la longueur des éléments de liaison.

3. Composant selon revendication 1 ou 2,
**caractérisé en ce que**, sur au moins un bord latéral (9), plusieurs éléments de liaison (6, 11), distancés les uns des autres, sont moulés par injection d'une pièce avec la couche de coeur (7).

4. Composant selon l'une des revendications 1 à 3,
**caractérisé en ce que**, sur au moins deux bords latéraux, des éléments de liaison (6), destinés à relier deux composants (5) par un déplacement relatif, perpendiculairement au plan de pose, sont moulés par injection d'une pièce avec la couche de coeur (7).

5. Composant selon l'une des revendications 1 a 3,
**caractérisé en ce que**, sur au moins un bord latéral (13), un élément de liaison (14), avec une section conique (15) pour relier deux composants (16) par un déplacement relatif, parallèlement au bord latéral (13), est moulé par injection d'une pièce avec la couche de coeur.

6. Composant selon la revendication 5,
**caractérisé en ce que** la section conique (15) est orientée perpendiculairement ou parallèlement à la face supérieure du composant (16).

7. Composant selon l'une des revendications 1 à 6,
**caractérisé en ce que**, sur deux bords latéraux adjacents, des éléments de liaison identiques sont moulés par injection d'une pièce avec la couche de coeur.

8. Composant selon l'une des revendications 1 à 7,
**caractérisé en ce que**, sur au moins un bord latéral, un élément d'étanchéité est intégré dans la zone de jointoiement.

9. Composant, de préférence pour le revêtement de sols, murs et plafonds,
- avec une couche de coeur (2, 7),
- sachant qu'au moins la couche de coeur (2, 7) consiste en un mélange de matière synthétique et de matériau contenant de la cellulose ligneuse, et
- sachant que la couche de coeur (2, 7) est dotée, sur au moins deux des bords latéraux opposés (4, 4'), d'éléments de liaison (42, 50) correspondants, et
- sachant qu'au moins un élément de liaison (42, 50) consiste en un matériau qui diffère du matériau de la couche de coeur (2, 7) et est relié durablement à la couche de coeur (2, 7) par moulage par injection, et que les éléments de liaison sont réalisés en forme de moyens de verrouillage,
**caractérisé en ce que**
- l'on utilise un mélange de matière synthétique et de matériau contenant de la cellulose ligneuse dans un rapport de mélange situé dans un domaine de 60 : 40 et 40 : 60,
- le mélange présente un moyen de réticulation et
- au moins sur un bord latéral (9), un élément de liaison (11), avec une contre-dépouille pour la liaison de deux composants (10), est moulé par injection d'une pièce avec la couche de coeur,
- sachant que les éléments de liaison (3, 3', 6, 11, 14) sont aménagés afin que, suite à une déformation d'un élément de liaison (3, 3', 6, 11, 14), une force de traction agisse dans la direction d'un composant voisin.

10. Composant selon la revendication 9,
**caractérisé en ce que** l'au moins un élément de liaison (42, 50) est au moins partiellement de conception élastique.

11. Procédé destiné à la fabrication d'un composant selon l'une des revendications 1 à 8, de préférence pour revêtements de sols, murs et plafonds,
- dans lequel au moins une couche de coeur du composant est moulée par injection, à partir d'un mélange qui comprend une matière synthétique et un matériau contenant de la cellulose ligneuse,
- dans lequel, sur au moins deux bords latéraux, des éléments de liaison correspondants sont moulés par injection d'une pièce avec la couche de coeur,
- dans lequel les éléments de liaison sont réalisés en forme de moyens de verrouillage,
- sachant que, sur au moins un bord latéral, un élément de liaison, avec une contre-dépouille pour la liaison de deux panneaux, est moulé par injection d'une pièce avec la couche de coeur.

12. Procédé selon la revendication 11,
c**aractérisé en ce que**, sur au moins un bord latéral, plusieurs éléments de liaison, distancés les uns des autres, sont moulés par injection d'une pièce avec la couche de coeur.

13. Procédé selon revendication 11 ou 12,
**caractérisé en ce que**, sur au moins deux bords latéraux, un élément de liaison, destiné à relier deux composants par un déplacement relatif, perpendiculairement au plan de pose, est moulé par injection d'une pièce avec la couche de coeur.
